# EUROPEAN PATENT SPECIFICATION

(11) **EP 2 656 729 B1**
(45) Date of publication and mention of the grant of the patent: **10.06.2015**
(21) Application number: 13397512.8
(22) Date of filing: 19.04.2013
(51) Int. Cl.: A01D 46/00, A01D 46/24

(54) **A device for collecting cones, and a method for collecting cones**
Vorrichtung zum Sammeln von Zapfen, und Methode zum Sammeln von Zapfen
Dispositif pour recueillir des cônes, et méthode pour recueillir des cônes

(30) Priority: 24.04.2012 FI 20125445
(43) Date of publication of application: 30.10.2013
(73) Proprietor: UPM-Kymmene Corporation, 00130 Helsinki (FI)
(72) Inventor: Kuru, Kari, 45370 Valkeala (FI)
(74) Representative: Tampereen Patenttitoimisto Oy

(56) References cited:
- SU-A1- 584 823
- SU-A1- 674 721
- SU-A1- 897 154
- SU-A1- 942 624

## Description

### Field of the invention

The invention relates to an apparatus for collecting cones, particularly an apparatus for collecting cones from tree branches or crowns. The invention also relates to a method, particularly a method for collecting cones from tree branches or crowns.

### Background of the invention

In forest cultivation, lots of seeds of forest trees are utilized in forest regeneration. In Finland, with respect to pine, for example, the proportion of sowing in regeneration and thereby the consumption of seeds is high compared with e.g. other Nordic countries. In the case of spruce, most of the seeds are utilized in tree nurseries. In addition to sufficiency, the seeds should be of suitable origin for the regeneration site and have as good genetic properties as possible. In addition to forests, cones are obtained from particular seed orchards where planted trees produce cones which are collected.

The quality and efficiency of cone collecting are vital in view of forest cultivation. The seeds of forest trees are obtained from cones which are stored and handled in various ways for removing the seeds from the cones, called "shaking out".

Cones are collected, particularly at seed orchards, for example by a self-propelled or movable aerial work platform equipped with a cage for persons and a cone container constructed under the cage. However, when a collecting person is standing above the cones in the container, for example mould can be carried to the cones by soil and dirt adhered to the footgear of the collecting person. Branches, needles, moss, and humus are favourable culture media for mould, so that it is important to remove them from the cones as early as possible. Moulds decrease, for example, the storage life of the seeds.

Comb-like apparatuses have been designed for the collection of cones, through which apparatuses the crown of a felled tree is pulled. The comb removes the cones and drops them to a collecting container. The processing of trees is performed, for example, by a harvester, utilizing a harvester head equipped with feeding members for pulling the tree trunk. The method is limited particularly to spruce, whose cones are placed close to each other in the crown. The comb also removes branch tips and other refuse from the crown of the tree, so that the cones have to be cleaned with a separate apparatus or in a separate step. The method is not suitable for seed orchards, because the trees grown there are not felled.

Document SU 674 721 A1 discloses a pinc cone collector with collecting implements having flexible elements on pivoted arms with a drive.

The collecting of cones from seed orchards and forest stands is still performed almost completely manually. In forest stands, cones are collected manually from crowns of trees after felling.

### Brief summary of the invention

The solution for an apparatus for collecting cones according to the invention is presented in claim 1. The solution for a method according to the invention is presented in claim 12. Other claims present more detailed embodiments of said solutions.

The solution relates to a cone collecting apparatus, the apparatus comprising jaws to be placed against each other, between which an elongated gap is left and configured for an operation in which a tree branch placed in the gap can retract through the gap but the cones to be collected from the branch do not fit through the gap and are detached.

In an example, the apparatus comprises an upper jaw and a lower jaw, at least one of the jaws being movably connected to the apparatus, and the jaws having both an open position and a closed position. The apparatus comprises at least one actuator which is configured to move either the upper jaw or the lower jaw, or both of them, to the open and closed positions. In the closed position of the apparatus, at least one elongated gap with a predetermined height is formed between the jaws. Said gap is configured for an operation in which a tree branch placed in the gap can retract through the gap but the cones to be collected from the tree branch do not fit through the gap and are detached. In the open position of the apparatus, the distance between the jaws at the gap is greater than said predetermined height.

In the presented solution, the gap is configured to be such that when a tree branch is passed through the gap, the gap detaches cones from the branch and lets the other parts of the branch pass freely through the gap. In this way, the collection of branch bits, bark and needles is avoided. Thanks to the opening and closing function, the apparatus is easy to place around a tree branch of even a growing tree or crown. Furthermore, it is also easy to place a cut branch or a branch of a crown of a felled tree into the apparatus.

Utilizing an actuator makes it possible to operate in a fast and effective way and to collect cones by machine.

In an example, the apparatus further comprises at least one elevating part connected to one of the jaws. Said elevating part is, in the closed position of the apparatus, configured to be placed against the other jaw and to maintain a predetermined height in the gap.

The presented example makes it possible to control and adjust the gap to be suitable in view of the dimensions of the cones to be collected. Preferably, the elevating part is replaceable or adjustable in order to optimize the height of the gap as desired. The elevating part can be, for example, a bolt, a pin, a tooth, a raising part, a stopper, or an obstruction which maintains the height of the gap and is placed, for example, between the jaws.

In an example, the upper jaw extends substantially on the same level at the gap and alongside the gap. Alongside the gap, the distance between the lower jaw and the upper jaw is greater than at the gap.

Preferably, the upper jaw is also placed onto or above the lower jaw so that the cone would turn and fall exactly in the direction of the lower jaw. The above presented formation of the jaws and the gap makes it possible that the cone is swivelled by the upper jaw and is detached from the branch more easily.

In an example, the apparatus further comprises a camera device configured to monitor the area between the jaws. This makes it possible to operate the apparatus by remote control and particularly by machine, whereby for example the operator of the machine or the driver of the working machine can control the apparatus. By means of the camera device, it is possible to secure the placement of the branch between the jaws and to look for a suitable tree branch or cones.

In addition or alternatively, said camera device can also comprise a special camera, such as a spectral camera, for recording the spectrum of radiation emitted, reflected or transmitted by an object within one or more wavelength ranges. It may be a so-called multispectral camera or hyperspectral camera. Said special camera is configured to detect particularly cones, wherein the camera device can be used for searching for and detecting of cones.

The display of the camera device and, in the case of a special camera, also a computer device, if necessary, are placed within reach of the operator of the machine or the driver of the working machine, for example in the cabin of the working machine.

In an embodiment, the apparatus further comprises a collecting part placed in the vicinity of the gap. The collecting part collects detached cones. Furthermore, the apparatus comprises feeding members for conveying the cones from the collecting part to a collecting container which may be, for example, a container, a box, a bag, or a sack.

In the collection of cones, for example small sacks made of kraft paper or jute fabric and having the size of 50 to 80 litres can be used as collecting containers. Alternatively, it is also possible to use, for example, a big bag with a capacity of 500 to 200 kg, for example, a model having the size of 1100 litres and equipped with an air permeable cloth, a filling spout, a discharge valve, and four lifting loops.

In an example, the apparatus further comprises at least one actuator which is configured to turn the position of the jaws in such a way that the gap is simultaneously tilted to positions in which the position of the gap deviates from the horizontal position.

In an example, the apparatus further comprises at least one actuator which is configured to turn the position of the jaws in such a way that the gap is simultaneously tilted around an axis parallel to its own longitudinal direction.

In an example, the apparatus further comprises members configured to clean the apparatus by blowing compressed air.

The above presented examples make it possible to mechanize the apparatus for collecting cones and particularly the handling of branches or crowns of growing trees. By means of the actuator, the jaws are turned to correspond to the position of the branch, so that part of the tree branch is placed in the gap. By increasing the number of actuators, more versatile movements can be produced.

In an embodiment, the apparatus according to the solution is configured in the controllable knuckle boom crane of a working machine. The crane which consists of two or more rotatable boom parts, enables versatile movements of the apparatus when the actuators of either the crane or the apparatus are also utilized. The knuckle boom crane comprises at least one actuator for controlling its position. In particular, said embodiment makes it possible to collect cones from growing trees. In an example, one of the boom parts can operate in a telescopic manner, wherein the reach of the apparatus can be increased.

In an embodiment, the presented solution is a working machine which is a mobile vehicle and comprises a controllable knuckle boom crane. The working machine also comprises the above presented apparatus fixed in the knuckle boom crane.

The use of the working machine makes it possible to mechanize the collecting of cones and to use the collecting apparatus in an efficient way. The apparatus is connected to the control system of the working machine which is used for controlling, among other things, the actuators of the apparatus. The apparatus utilizes, for example, the hydraulic system of the working machine. The working machine, particularly an all-terrain working machine, makes it possible to move and collect cones both in forest stands and in seed orchards.

In an example, the working machine is a working machine that utilizes the chassis and the controllable knuckle boom crane of a harvester or a forwarder. In this way, the use of said working machine can be made more versatile. Furthermore, when the apparatus is configured in such a way that it can be fastened to knuckle boom cranes of existing working machines, the use of an knuckle boom crane or a working machine with a special structure is avoided.

In the method according to the presented invention, a cone collecting apparatus is utilized, which apparatus comprises jaws to be placed against each other, between which an elongated gap is left and configured for an operation in which a tree branch placed in the gap can retract through the gap but the cones to be collected from the branch do not fit through the gap and are detached.

According to an example, the method comprises:
a) utilizing an apparatus comprising an upper jaw and a lower jaw, at least one of the jaws being movably connected to the apparatus, and the jaws having a closed position and also an open position which is more open than the closed position;
b) moving the jaws to the open position by utilizing at least one actuator configured in the apparatus and moving either the upper jaw or the lower jaw, or both of them, to the open and closed positions;
c) positioning either said apparatus or a tree branch containing cones to be collected, in such a way that at least part of the tree branch is placed between the jaws;
d) moving the jaws to the closed position by utilizing said actuator, wherein at least one elongated gap is formed between the jaws, the gap having a predetermined height which allows the retraction of the tree branch placed in the gap through the gap but is configured smaller than the thickness of the cones to be collected from the tree branch; and
e) moving either the apparatus or the tree branch in such a way that the tree branch is retracted through the gap and cones are simultaneously detached from the tree branch.

The above presented operations are repeated for collecting cones from branches and the crown of a tree. In the presented solution, the gap is configured in such a way that other parts of the branch than the cones can pass freely through the gap. Thanks to the opening and closing function, the jaws are easy to place around a tree branch of even a growing tree or crown. Furthermore, it is also easy to place a cut branch or a branch of the crown of a felled tree between the jaws.

The dimensions of the gap are configured to fit exactly the dimensions of the cones to be collected. In the dimensions, the thickness of the different parts of the tree branch are also taken into account. The jaws and the gap are normally positioned in a location where the different parts of the tree branch are smaller than the gap.

According to some examples, the positioning of the apparatus and the detachment of the cones are performed in such a way that the apparatus is moved in relation to the tree branch, and furthermore, the collecting is performed from standing trees. This way of implementation is particularly suitable for a mechanized method utilizing e.g. an knuckle boom crane and a working machine.

In an example, the apparatus is connected to the controllable knuckle boom crane of the working machine, for moving the apparatus. Said example makes it possible to mechanize the apparatus and particularly to handle the branches of a standing tree. By means of the actuator, the jaws are turned to match the position of the branch, so that the branch is placed between the jaws when they are in the closed position.

As already stated above, the above presented apparatus for performing the collecting under control of the operator and by machine, makes it possible to mechanize the collection of cones from standing trees by utilizing a particularly controllable knuckle boom crane in which said apparatus is placed, and in the case of a working machine which is a movable vehicle, in which said knuckle boom crane is provided.

The use of said working machine also makes efficient use possible, even in the case of other apparatuses which are configured to collect cones from standing trees by machine, under the control of an operator. In addition to the example apparatus presented in this description, other corresponding apparatuses are also feasible which are not discussed in more detail in this description. In particular, such apparatuses are feasible that have jaws to be placed against each other, an elongated gap being left between the jaws. Said gap is configured for an operation in which a tree branch placed in the gap can retract through the gap but the cones to be collected from the tree branch do not fit through the gap and are detached.

The apparatus and the method according to the solution are suitable for collecting cones from pines in the genus *Pinus,* spruce species in the genus *Picea,* as well as larch species in the genus *Larix.*

### Description of the drawings

In the following, the presented solutions will be described in more detail with reference to the appended drawings, in which:
- Fig. 1: shows an example in which the apparatus according to the solution is fixed in the knuckle boom crane of a working machine and in which a method for collecting cones from a growing tree is applied;
- Fig. 2: shows an example of the apparatus in a side view, fixed in a knuckle boom crane;
- Fig. 3: shows another example of the apparatus in a top view;
- Fig.4: shows an example of applying the method according to the solution in the collecting of cones from a tree branch, in a top view; and
- Fig. 5: shows a detail of an apparatus according to the solution, in a cross-sectional side view.

### Detailed description of the invention

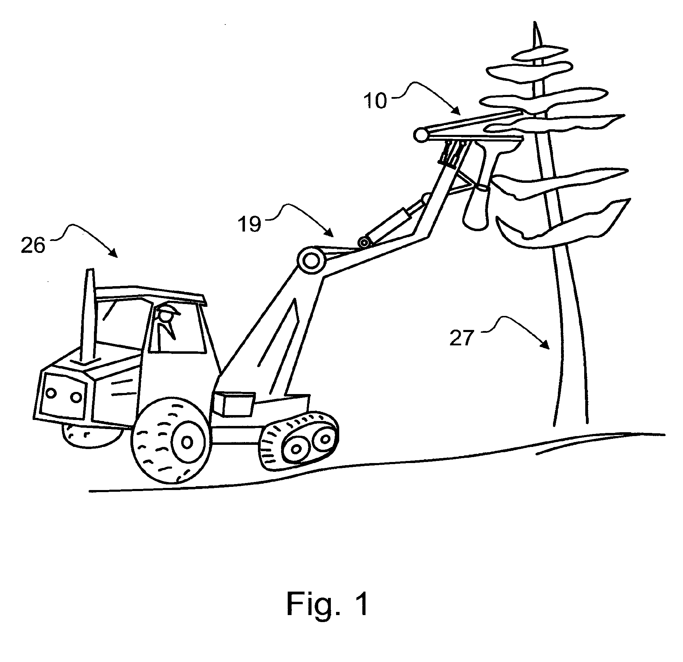

Figure 1 shows an example of an apparatus 10 according to the solution, which is particularly an apparatus for collecting or detaching cones from tree branches or crowns. Figure 1 shows the collecting of cones from the branches of a growing tree.

In the example of Fig. 1, the apparatus 10 is connected to a knuckle boom crane 19 in a working machine 26. The presented working machine 26 is of a type that utilizes the chassis and the knuckle boom crane of a harvester. Instead of a harvester head or a felling head, the apparatus 10 is fixed to the end of the knuckle boom crane 19. The apparatus 10 is used for collecting cones from a growing tree 27. Said combination of the working machine, the knuckle boom crane and the apparatus 10 can be used for applying the method according to the solution. The working machine 26 is capable of moving on uneven terrain in forest stands, and the apparatus 10 is controlled by the driver of the working machine 26 in the cabin of the working machine. It is also possible that the apparatus 10 is controlled by remote control outside the cabin, for example on the terrain.

The collecting is normally performed from pines and spruces, particularly their crowns, and preferably the top part of their crowns. The working machine and the knuckle boom crane make a wide reach possible compared with a situation in which the collecting is performed manually by means of an aerial work platform.

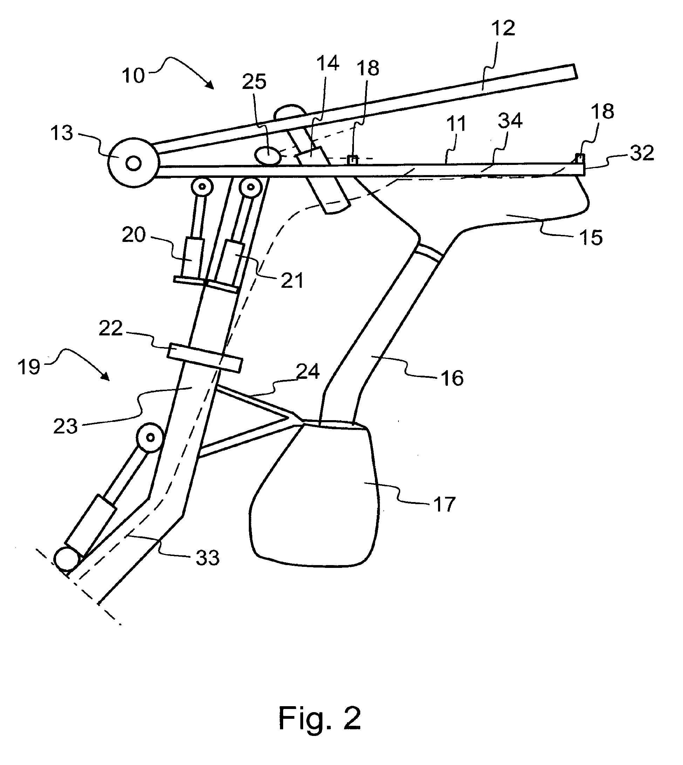

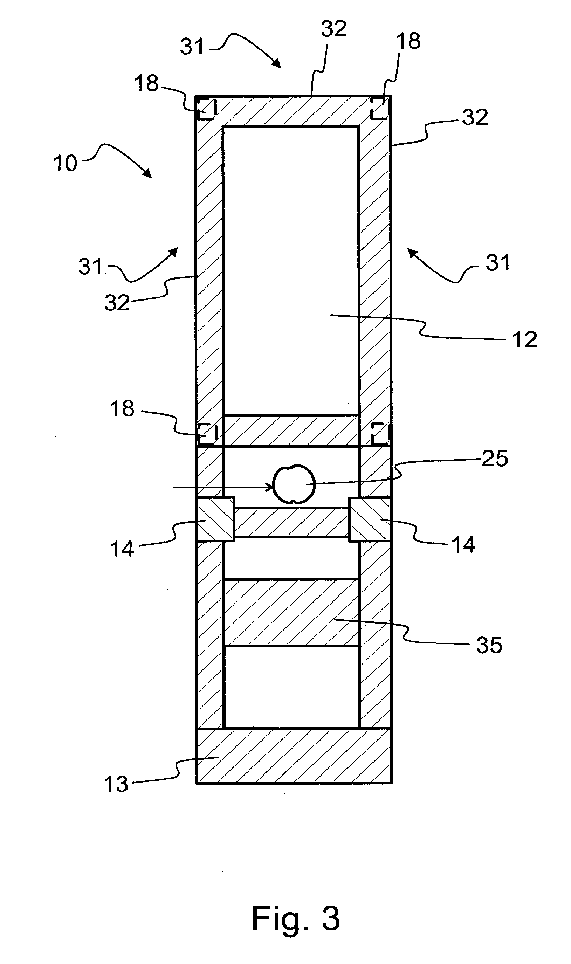

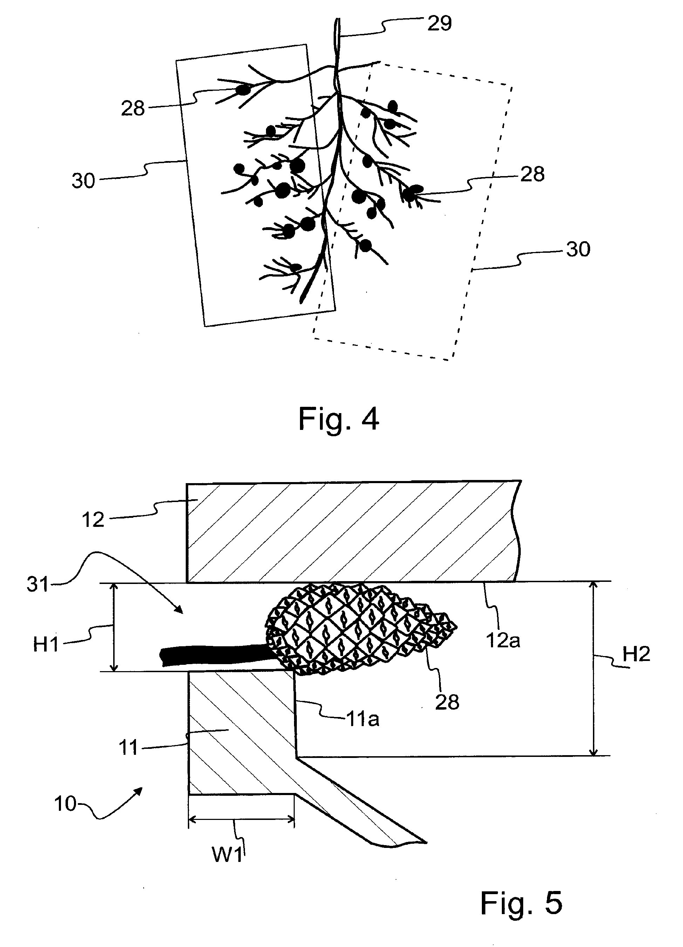

Figures 2 and 3 show some examples of the apparatus 10 comprising two jaws 11, 12. The upper jaw 12 is connected to the apparatus by means of a joint 13 in such a way that it can rotate to a closed position (see Fig. 5) and to the open position shown in Fig. 2. In this example, each jaw constitutes a structure that is connected to the opposite jaw and constitutes a part of the structure of the apparatus 10, to which *e.g*. the actuators are connected, or which can be connected to a knuckle boom crane 19. In the example of Fig. 3, the apparatus 10 also comprises a frame structure 35 which is a part of the lower jaw 11 and to which *e.g.* the knuckle boom crane 19, or the boom part 23, or the actuators can be fastened.

In the example of Fig. 3, the structure of the upper jaw 12 comprises a reinforcing structure, for example a framework, which encloses the upper jaw 12 but is not between the jaws. In an example, the upper jaw 12 is a flat plate which is *e.g*. rectangular, as shown in Figs. 3 and 5. In an example, the structure of the lower jaw 11 comprises a framework which encloses the lower jaw 11 and is between the jaws 11, 12, wherein a gap 31 is formed between said framework and the upper jaw 12, as shown in Fig. 5.

In this description, the upper and lower jaw refer particularly to jaws which are continuously on top of each other in the vertical direction, or alternatively, jaws which can be placed under and on top of a tree branch. Furthermore, the apparatus may have positions in which the jaws are next to each other.

Actuators 22, 20 and 21 of the knuckle boom crane 19 shown in Fig. 2, or some of them, can either be part of the structure of the apparatus 10 or belong to the knuckle boom crane 19. The structure of the apparatus 10 may comprise, for example, a boom part 23, to which the actuators 22, 20 and 21, or some of them, are fastened and which can be fastened to the knuckle boom crane 19. The fastening is performed, for example, by means of a joint, and the position of said boom part is controlled by means of an actuator.

Figures 1 and 2 show an example of the apparatus 10, in whose structure the boom part 23 according to the above presented type is applied.

In another example, the jaws 11 and 12 are shorter than in Fig. 2, and the joint 13 is placed in the middle part of the apparatus 10. In yet another example, one of the jaws is shorter than the other jaw, and the joint 13 is placed in the middle part of the apparatus 10.

An actuator 14, of one or more actuators, moves the upper jaws 12 to the closed and open positions.

In an example, the actuators used are hydraulic cylinders. The actuators are driven by pressurized medium, and they are connected to a control circuit consisting of, for example, a source of pressurized medium, channels for the medium, valves, and control members. The valves of the control circuit are controlled either manually or by an electric control system, by using, for example, a control stick as the control member. Manual operation refers to e.g. controlling the valves of the control circuit manually by means of a lever. The hydraulic system of the working machine can be used as the control circuit. The control members of the working machine can be used as the control members. The electronic control system can also be equipped with automatic functions to take care of the operation of the apparatus 10. The apparatus 10 can comprise actuators which are pneumatic cylinders connected to the pneumatic system of the working machine.

The apparatus 10 shown in Fig. 2 is, in view of both the apparatus 10 and the jaws 11, 12, rectangular in shape, as shown in Fig. 3, in such a way that a gap 31 of a predetermined height is formed at its one end and on two opposite edges or sides.

The formation of the gap 31 can be implemented in various ways. In the presented example, the gap 31 is formed in such a way that at least one elevating part 18 is placed between the jaws 11 and 12, to maintain the height of the gap and preventing the jaws 11, 12 from touching each other or from coming closer to each other than a predetermined height of the gap 31 (see height H1 in Fig. 5). In the examples of Figs. 2 and 3, the elevating parts 18 are fastened to the lower jaw 11 and placed close to the outer edge 32 of the jaw 11 at the gap 31, wherein the distance between two elevating parts 18 from each other simultaneously determines the length of the gap 31. The elevating part may also be placed farther away between the jaws 11, 12, wherein it is not at the gap 31 and does not limit the length of the gap. In another example, the elevating part 18 is fastened to the upper jaw 12, for example its outer edge, in a way corresponding to the placement in Fig. 3.

The shapes of the apparatus 10 and the jaws 11, 12 can also be different from each other. According to some other examples, the apparatus only comprises one gap, or alternatively there are two or more gaps, for example three gaps as shown in Fig. 3. The gap is elongated, *i.e*. oblong, seen in the longitudinal direction of the gap. In the presented example, the gap is also straight, because the edges of the jaws are straight. According to another example, the elongated gap is curved, wherein the edge of the jaws can be curved as well. If two or more gaps are provided, the gaps are preferably one after the other, or they are placed substantially in the same plane.

The length of the gap or the distance between the elevating parts is configured to comply with the tree branch. In an example, the length of the gap is about 600 to 1200 mm. In the example of Fig. 2, the length of the gaps 31 on opposite sides of the jaws 11, 12 is about 1200 mm, and the length of the gap placed between them, at the end of the jaws 11, 12, is about 600 mm.

The gap may comprise a portion in which the height of the gap is greater than in the other portions of the gap. The stem part of the tree branch can be placed here. This makes it possible to collect cones from a tree branch by a single sweep.

The actuator 21 turns the jaws 11, 12 together in such a way that the gap is tilted and it can be swivelled to an inclined position deviating from the horizontal position shown in Fig. 2. In this way, the gap can be turned to match the position of the branch. The actuator 21 is, for example, a hydraulic cylinder.

The actuator 20 turns the jaws 11, 12 together in such a way that the gap is tilted around its own longitudinal direction, or around such an axis that is parallel to said longitudinal direction. In this way, the gap can be tilted forward or backward, that is, to the right or to the left, compared with the position shown in Fig. 2. In this way, hanging tree branches can also be brought between the jaws. The actuator 20 is, for example, a hydraulic cylinder.

In an example, the apparatus 10 or the knuckle boom crane 19 comprises an actuator 22 for rotating the apparatus 10 around such an axis that is substantially vertical. The actuator 22 is *e.g*. a hydraulic rotator or a rotatable joint installed in the boom part 23.

The apparatus comprises a collecting part 15 placed at one or more gaps in such a way that the collecting part 15 collects cones detached by the gap and left between the jaws, and falling or remaining inside them. Preferably, the collecting part is in connection with and under the lower jaw 11. The shape of the collecting part 15 may be, for example, trough-like or otherwise designed in such a way that the detached cones are guided by gravity and carried to the collecting part or to a predetermined location in the collecting part 15. Said predetermined location can be, for example, feeding members 16 for conveying the cones away from the collecting part 15 to a collecting container 17. The collecting container 17 is, for example, a container, a box, a bag, or a sack which is fixed or replaceable. Preferably, the cones are collected to a replaceable big bag. In an example, the feeding members 16 consist of a hose made of fabric. The feeding members 16 may comprise one or more openable closing members for blocking the cones or preventing their entry from the collecting part 15. In transferring the cones, the feeding members utilize *e.g*. gravity, if necessary also blowing, for example, compressed air.

The apparatus 10, the knuckle boom crane 19, or the boom part 23 is provided with a support 24, to which the collecting container 17 can be fastened. The feeding members 16 can also be connected to the support 24, to the knuckle boom crane 19, or to the boom part 23. The collecting container 17 can also be placed elsewhere in the working machine, for example on top of its frame.

The apparatus 10, the knuckle boom crane 19, or the boom part 23 can be provided with hoisting members, to which the collecting container 17 can be fastened for hoisting and transfer operations. Furthermore, the working machine can be equipped with a transportation stand, in which one or more collecting containers 17 can be transported.

In an example, the collecting part 15, particularly its bottom, is at least partly formed as a sieve-like structure that keeps the cones in the collecting part 15 and allows other parts of the tree branch and refuse as well as snow detached from the tree branch and accumulated in the collecting part 15 to pass through. The sieve is formed by means of *e.g*. a grid, a lattice, a mesh, or another coarse structure that allows said parts to pass through. The sieve-like structure, for example a grid, is placed in such a way and configured to have such dimensions that the placement of the tree branch between the jaws can be seen through the structure.

Preferably, for securing the visibility of the tree branch, the lower surface of the upper jaw 12, facing the lower jaw 11 and the collecting part 15, has such a colour that it forms a good contrast in relation to the colour of the tree branch. The colour is, for example, light or preferably white.

In an example, the apparatus further comprises members, by means of which the apparatus 10 and particularly the jaws can be cleaned by blowing compressed air, for example in the way shown in Fig. 2. The blowing is synchronized with the operation of the jaws, or it is only performed where necessary. The blowing enhances the removal of refuse from between the jaws or from the collecting part 15, or it can be used for guiding the movement of cones in the collecting part 15 or in the feeding members 16.

The members for blowing comprise compressed air ducts 33, by means of which compressed air is supplied to one or more nozzles 34 which guide the blow of compressed air to a desired location. The compressed air ducts 33 are connected to a compressed air source, for example a compressor or a pressure accumulator, and, if necessary, also one or more controlled valves, by means of which the blow of compressed air is controlled manually or automatically. In the example of Fig. 2, the nozzles are placed in the lower jaw 11, and the compressed air ducts 33, for example hoses, are fastened to the knuckle boom crane 19 and connected to the compressed air system of the working machine. According to some other examples, nozzles 34 are placed in the upper jaw 12 or the collecting part 15 or the feeding members 16.

Furthermore, the apparatus 10 comprises a camera device 25 which is preferably configured to monitor the area between the jaws. By means of the camera device, it is possible to secure the placement of the branch between the jaws and to look for a suitable tree branch or cones. The camera device comprises, for example, a camera operating in the wavelength range of visible light, or another special camera. The image is transmitted in a wireless manner or by means of wires to, for example, the cabin of the working machine. The camera device may comprise several cameras monitoring the environment or the apparatus 10, and furthermore, the types of the cameras may deviate from each other, being, for example, a special camera.

Figure 4 shows the method according to the solution and the operation of the apparatus 10 in said method in more detail.

The area 30 of Fig. 4 illustrates a location where the apparatus 10 is placed for collecting cones 28 from a tree branch 29. In this example, the tree branch 28 is placed only partly between the jaws. If the central part of the tree branch 29 is larger than the gap, the placement of the central part in the gap is avoided. The gap is configured to have such a height that the thickness of the cones is greater than the height of the gap (see the height H1 of the gap 31 in Fig. 5). In some cases, the tree branch can be placed entirely between the jaws and only the central stem remains in the gap. The cones are detached from the tree branch by one or more sweeps; in other words, by moving either the apparatus 10 or the tree branch 29; and in the example of Fig. 4, the cones are detached from the tree branch by two sweeps, when the apparatus is positioned on opposite sides of the central part of the tree branch 29 for performing each sweep. During the positioning, the jaws are open, and during the pulling, the jaws are closed.

In a situation according to Fig. 4, either the apparatus 10 or the tree branch 29 is moved. In the case of an apparatus according to Fig. 2, fastened to *e.g*. a working machine, the apparatus 10 is moved and the tree branch remains stationary and fixed to a growing tree.

Figure 5 shows the operation of the gap 31 during the collection of cones 28 in more detail.

The height H1 of the gap 31 is adjusted greater than the thickness of the cone 28, so that the cone cannot pass through the gap 31 during sweeping but is detached from the tree branch. The gap 31 is formed between the upper jaw 12 and the lower jaw 11. In this example, the upper and lower edges of the gap 31 are straight, but their cross-sectional shape can also be curved, oblique or conical.

According to the example of Fig. 5, the width W1 of the gap 31 is determined by the shape of the lower jaw 11. The upper jaw 12, particularly its lower surface 12a, extends substantially on the same plane at the gap 31 and next to it (in Fig. 5, on the right hand side of the gap 31). The upper jaw 12 is formed by means of, for example, a plate. Next to the gap 31, the distance H2 of the lower jaw 11 with respect to the upper jaw 12 is, in turn, greater than at the gap 31 with said distance H1.

The shape of the jaws shown in Fig. 5 detaches the cone from the tree branch, because the upper jaw 12 turns the cone 28 downwards. The lower jaw 11 does not prevent the turning of the cone, because the distance H2 is greater than the distance H1. The cone is placed against the inner edge 11a of the lower jaw 11. After the detachment of the cone, it falls inside the lower jaw 11 and is conveyed to, for example, the collecting part 15, from which it is conveyed via the feeding members 16 to the collecting container 17. Several cones are detached from the tree branch simultaneously.

The various embodiments of the solution according to the invention are not limited solely to the examples presented in the appended drawings or particularly discussed in the above specification, or referred to in the specification.

The above presented particular features of the solution can also be combined and implemented in various combinations which are not presented in the above examples. These combinations are in accordance with the appended claims.

## Claims

1. A cone collecting apparatus (10), the apparatus comprising jaws (11, 12) to be placed against each other, between which an elongated gap (31) is left and configured for an operation in which a tree branch (29) placed in the gap can retract through the gap but the cones (28) to be collected from the branch do not fit through the gap and are detached.

2. The apparatus (10) according to claim 1, the apparatus comprising:
- an upper jaw (12) and a lower jaw (11), at least one of the jaws being movably connected to the apparatus, and the jaws having both an open position and a closed position; and
- at least one actuator (14) which is configured to transfer either the upper jaw or the lower jaw, or both of them, to the open and closed positions;
- wherein in the closed position, at least one elongated gap (31) is formed between the jaws (11, 12), the gap having a predetermined height and being configured for an operation in which a tree branch (29) placed in the gap can retract through the gap but the cones (28) to be collected from the branch do not fit through the gap and are detached; and
- wherein in the open position, the distance between the jaws at the gap is greater than said predetermined height.

3. The apparatus (10) according to claim 1 or 2, the apparatus further comprising at least one elevating part (18) connected to one of the jaws (11, 12), said elevating part being configured to be placed against the other jaw and to maintain a predetermined height in the gap (31).

4. The apparatus (10) according to any of the claims 1 to 3, one of the jaws (11, 12) extending substantially on the same level at the gap (31) and alongside the gap, the distance between the other jaw (11) and the upper jaw (12) being greater along-side the gap than at the gap.

5. The apparatus (10) according to any of the claims 1 to 4, the apparatus further comprising a camera device (25).

6. The apparatus (10) according to any of the claims 1 to 5, the apparatus further comprising a collecting part (15) placed by the gap (31) and configured to collect detached cones (28), as well as feeding members (16) for conveying the cones away from the collecting part to a collecting container (17).

7. The apparatus (10) according to claim 6, the collecting part (15) being at least partly configured as a sieve-like structure configured to keep the cones (28) detached by the gap (31) in the collecting part, and to allow other parts detached from a tree branch and accumulated in the collecting part, to pass through.

8. The apparatus (10) according to any of the claims 1 to 7, the apparatus further comprising at least one actuator (21) configured to turn the position of the jaws (11, 12) such a way that the gap (31) formed by the jaws is simultaneously tilted to positions in which the position of said gap deviates from the horizontal position,
and/or further at least one actuator (20) configured to turn the position of the jaws (11, 12) in such way that the gap (31) formed by the jawsis simultaneously tilted around an axis parallel to its own longitudinal direction.

9. The apparatus (10) according to any of the claims 1 to 8, the apparatus further comprising members (33, 34) configured to clean the apparatus by blowing compressed air.

10. A working machine (26) which is a moving vehicle and comprises:
a controllable knuckle boom crane (19); and
- an apparatus configured in said knuckle boom crane and being an apparatus (10) according to any of the claims 1 to 9.

11. The working machine (26) according to claim 10, said working machine being a working machine utilizing the chassis of a harvester or a forwarder and a controllable knuckle boom crane (19).

12. A method utilizing a cone collecting apparatus, the apparatus (10) comprising jaws (11, 12) to be placed against each other, between which an elongated gap (31) is left and configured for an operation in which a tree branch (29) placed in the gap can retract through the gap but the cones (28) to be collected from the branch do not fit through the gap and are detached.

13. The method according to claim 12, comprising:
- utilizing an apparatus (10) comprising an upper jaw (12) and a lower jaw (11), at least one of the jaws being movably connected to the apparatus, and the jaws having a closed position and also an open position which is more open than the closed position;
- moving the jaws to the open position by utilizing at least one actuator (14) configured in the apparatus and moving either the upper jaw or the lower jaw, or both of them, to the open and closed positions;
- positioning either said apparatus (10) or a tree branch (29) containing cones (28) to be collected, in such a way that at least part of the tree branch is placed between the jaws (11, 12);
- transferring the jaws (11, 12) to the closed position by utilizing said actuator (14), wherein at least one elongated gap (31) is formed between the jaws, the gap having a predetermined height which allows the retraction of the tree branch (29) placed in the gap through the gap but is configured smaller than the thickness of the cones (28) to be collected from the tree branch; and
- transferring either the apparatus (10) or the tree branch (29) in such a way that the tree branch is retracted through the gap (31) and cones (28) are simultaneously detached from the tree branch.

14. The method according to claim 13, wherein said positioning of the apparatus (10) and said detachment of the cones (28) are performed in such a way that the apparatus is moved in relation to the tree branch (29), and furthermore, the collecting is performed from standing trees.

15. The method according to claim 13 or 14, wherein the apparatus (10) is connected to the controllable knuckle boom crane (19) of a working machine (26), by means of which the apparatus is moved.

## Patentansprüche

1. Vorrichtung (10) zum Sammeln von Zapfen, wobei die Vorrichtung Backen (11, 12) aufweist, die aneinander liegend platziert werden sollen, zwischen denen ein Längsspalt (31) belassen ist und die für einen Arbeitsvorgang konfiguriert sind, bei dem ein im Spalt platzierter Baumast (29) durch den Spalt zurückgezogen werden kann, wobei jedoch die von dem Ast abzusammelnden Zapfen (28) nicht durch den Spalt passen und entfernt werden.

2. Vorrichtung (10) gemäß Anspruch 1, wobei die Vorrichtung Folgendes aufweist:
- eine obere Backe (12) und eine untere Backe (11), wobei mindestens eine der Backen beweglich mit der Vorrichtung verbunden ist, und die Backen sowohl eine offene als auch eine geschlossene Position haben; und
- mindestens ein Betätigungselement (14), das konfiguriert ist, um entweder die obere Backe oder die untere Backe oder beide in die offene und geschlossene Position zu bewegen;
- wobei sich in der geschlossenen Position mindestens ein Längsspalt (31) zwischen den Backen (11, 12) bildet, wobei der Spalt eine vorbestimmte Höhe hat und für einen Arbeitsvorgang konfiguriert ist, bei dem ein im Spalt platzierter Baumast (29) durch den Spalt zurückgezogen werden kann, wobei jedoch die von dem Ast abzusammelnden Zapfen (28) nicht durch den Spalt passen und entfernt werden; und
- wobei in der offenen Position der Abstand zwischen den Backen an dem Spalt größer ist als die vorbestimmte Höhe.

3. Vorrichtung (10) gemäß Anspruch 1 oder 2, wobei die Vorrichtung darüber hinaus mindestens ein Hebeelement (18), das an einer der Backen (11, 12) angebracht ist, aufweist, wobei das Hebeelement so konfiguriert ist, dass es an die andere Backe angelegt wird und eine vorbestimmte Höhe in dem Spalt (31) einhält.

4. Vorrichtung (10) gemäß einem der Ansprüche 1 bis 3, wobei eine der Backen (11, 12) sich im Wesentlichen auf derselben Höhe an dem Spalt (31) und entlang dem Spalt erstreckt, wobei der Abstand zwischen der anderen Backe (11) und der oberen Backe (12) entlang des Spalts größer ist als an dem Spalt.

5. Vorrichtung (10) gemäß einem der Ansprüche 1 bis 4, wobei die Vorrichtung darüber hinaus eine Kameravorrichtung (25) aufweist.

6. Vorrichtung (10) gemäß einem der Ansprüche 1 bis 5, wobei die Vorrichtung darüber hinaus ein durch den Spalt (31) platziertes Sammelteil (15) aufweist, das konfiguriert ist, um abgelöste Zapfen (28) aufzusammeln, sowie Zuführelemente (16) zum Abführen der Zapfen vom Sammelteil zu einem Sammelbehälter (17).

7. Vorrichtung (10) gemäß Anspruch 6, wobei das Sammelteil (15) zumindest teilweise wie eine siebähnliche Struktur konfiguriert ist, die konfiguriert ist, um die von dem Spalt (31) in dem Sammelteil abgelösten Zapfen (28) zu halten und es zu ermöglichen, dass andere, von einem Baumast entfernte und im Sammelteil gesammelte Teile hindurch gelangen.

8. Vorrichtung (10) gemäß einem der Ansprüche 1 bis 7, wobei die Vorrichtung darüber hinaus mindestens ein Betätigungselement (21) aufweist, das konfiguriert ist, um die Position der Backen (11,12) so zu drehen, dass der durch die Backen gebildete Spalt (31) gleichzeitig in Positionen gekippt wird, in der die Position des Spalts von der horizontalen Position abweicht, und/oder darüber hinaus mindestens ein Betätigungselement (20), das konfiguriert ist, um die Position der Backen (11, 12) derart zu drehen, dass der durch die Backen gebildete Spalt (31) gleichzeitig um eine Achse, die parallel zu ihrer eigenen Längsrichtung ist, zu kippen.

9. Vorrichtung (10) gemäß einem der Ansprüche 1 bis 8, wobei die Vorrichtung darüber hinaus Elemente (33, 34) aufweist, die konfiguriert sind, die Vorrichtung mittels Blasen von Druckluft zu reinigen.

10. Arbeitsmaschine (26), die ein bewegliches Fahrzeug ist und Folgendes aufweist:
- einen steuerbaren Gelenkauslegerkran (19); und
- eine Vorrichtung, die in dem Gelenkauslegerkran konfiguriert ist und eine Vorrichtung (10) gemäß einem der Ansprüche 1 bis 9 ist.

11. Arbeitsmaschine (26) gemäß Anspruch 10, wobei die Arbeitsmaschine eine Arbeitsmaschine ist, die das Fahrwerk einer Erntemaschine oder eines Tragrückeschleppers und einen steuerbaren Gelenkauslegerkran (19) verwendet.

12. Verfahren, das eine Vorrichtung zum Sammeln von Zapfen verwendet, wobei die Vorrichtung (10) Backen (11, 12) aufweist, die aneinander liegend platziert werden sollen, zwischen denen ein Längsspalt (31) belassen ist, und die für einen Arbeitsvorgang konfiguriert ist, in dem ein im Spalt platzierter Baumast (29) durch den Spalt zurückgezogen werden kann, wobei jedoch die von dem Ast abzusammelnden Zapfen (28) nicht durch den Spalt passen und entfernt werden.

13. Verfahren gemäß Anspruch 12, das Folgendes umfasst:
- Verwenden einer Vorrichtung (10), die eine obere Backe (12) und eine untere Backe (11) aufweist, wobei mindestens eine der Backen beweglich mit der Vorrichtung verbunden ist, und die Backen eine geschlossene Position und auch eine offene Position, die offener als die geschlossene Position ist, aufweisen;
- Bewegen der Backen in die offene Position durch Verwenden mindestens eines Betätigungselements (14), das in der Vorrichtung konfiguriert ist, und Bewegen entweder der oberen Backe oder der unteren Backe oder von beiden in die offene und geschlossene Positionen;
- Positionieren der Vorrichtung (10) oder eines Baumastes (29), der Zapfen (28) zum Aufsammeln aufweist, derart, dass zumindest ein Teil des Baumastes zwischen den Backen (11, 12) platziert ist;
- Bewegen der Backen (11, 12) in die geschlossene Position durch Einsatz des Betätigungselements (14), wobei sich mindestens ein Längsspalt (31) zwischen den Backen bildet, wobei der Spalt eine vorbestimmte Höhe hat, wodurch es ermöglicht wird, dass der in dem Spalt platzierte Baumast (29) durch den Spalt zurückgezogen wird, aber kleiner als die Dicke der von dem Baumast abzusammelnden Zapfen (28) ist, und
- Bewegen der Vorrichtung (10) oder des Baumastes (29) derart, dass der Baumast durch den Spalt (31) zurückgezogen wird und gleichzeitig Zapfen (28) von dem Baumast abgelöst werden.

14. Verfahren gemäß Anspruch 13, wobei das Positionieren der Vorrichtung (10) und das Ablösen der Zapfen (25) derart ausgeführt werden, dass die Vorrichtung in Bezug auf den Baumast (29) bewegt wird und darüber hinaus das Absammeln von stehenden Bäumen ausgeführt wird.

15. Verfahren gemäß Anspruch 13 oder 14, wobei die Vorrichtung (10) mit dem steuerbaren Gelenkauslegerkran (19) einer Arbeitsmaschine (26), durch die die Vorrichtung bewegt wird, verbunden ist.

## Revendications

1. Appareil de collecte de cônes (10), l'appareil comprenant des mâchoires (11, 12) à placer l'une contre l'autre, entre lesquelles est laissé un interstice allongé (31) et configuré pour un fonctionnement dans lequel une branche d'arbre (29) placée dans l'interstice peut se rétracter à travers l'interstice mais les cônes (28) à collecter sur la branche ne passent pas à travers l'interstice et se détachent.

2. Appareil (10) selon la revendication 1, l'appareil comprenant :
- une mâchoire supérieure (12) et une mâchoire inférieure (11), au moins une des mâchoires étant reliée mobile à l'appareil, et les mâchoires ayant à la fois une position ouverte et une position fermée ; et
- au moins un actionneur (14) qui est configuré pour commuter soit la mâchoire supérieure, soit la mâchoire inférieure, ou les deux, dans les positions ouverte ou fermée ;
dans lequel, dans la position fermée, au moins un interstice allongé (31) est formé entre les mâchoires (11, 12), l'interstice ayant une hauteur prédéterminée et étant configuré pour un fonctionnement dans lequel une branche d'arbre (29) placée dans l'interstice peut se rétracter à travers l'interstice mais les cônes (28) à collecter sur la branche ne passent pas à travers l'interstice et se détachent ; et
dans lequel, dans la position ouverte, la distance entre les mâchoires au niveau de l'interstice est supérieure à ladite hauteur prédéterminée.

3. Appareil (10) selon la revendication 1 ou 2, l'appareil comprenant en outre au moins une partie montante (18) raccordée à une des mâchoires (11, 12), ladite partie montante étant configurée pour se placer contre l'autre mâchoire et pour maintenir une hauteur prédéterminée dans l'interstice (31).

4. Appareil (10) selon l'une quelconque des revendications 1 à 3, une des mâchoires (11, 12) s'étendant essentiellement à la même hauteur au niveau de l'interstice (31) et le long de l'interstice, la distance entre l'autre mâchoire (11) et la mâchoire supérieure (12) étant plus grande le long de l'interstice qu'au niveau de l'interstice.

5. Appareil (10) selon l'une quelconque des revendications 1 à 4, l'appareil comprenant en outre un dispositif de caméra (25).

6. Appareil (10) selon l'une quelconque des revendications 1 à 5, l'appareil comprenant en outre un élément collecteur (15) placé près de l'interstice (31) et configuré pour collecter des cônes détachés (28), ainsi que des éléments d'alimentation (16) pour transporter les cônes à l'écart de l'élément collecteur dans un récipient collecteur (17).

7. Appareil (10) selon la revendication 6, l'élément collecteur (15) étant au moins partiellement configuré sous forme de structure de type tamis configurée pour maintenir les cônes (28) détachés par l'interstice (31) dans l'élément collecteur, et pour permettre à d'autres éléments détachés d'une branche d'arbre et accumulés dans l'élément collecteur de passer à travers.

8. Appareil (10) selon l'une quelconque des revendications 1 à 7, l'appareil comprenant en outre au moins un actionneur (21) configuré pour faire tourner la position des mâchoires (11, 12) de telle manière que l'interstice (31) formé par les mâchoires est simultanément incliné dans des positions dans lesquelles la position dudit interstice s'écarte de la position horizontale, et/ou en outre au moins un actionneur (20) configuré pour faire tourner la position des mâchoires (11, 12) de telle manière que l'interstice près des mâchoires est simultanément incliné autour d'un axe parallèle à sa propre direction longitudinale.

9. Appareil (10) selon l'une quelconque des revendications 1 à 8, l'appareil comprenant en outre des éléments (33, 34) configurés pour nettoyer l'appareil en soufflant de l'air comprimé.

10. Machine de travail (26) qui est un véhicule mobile et comprend :
- une grue à flèche articulée contrôlable (19) ; et
- un appareil configuré dans ladite grue à flèche articulée et étant un appareil (10) selon l'une des revendications 1 à 9.

11. Machine de travail (26) selon la revendication 10, ladite machine de travail étant une machine de travail utilisant le châssis d'une moissonneuse ou d'un porteur et une grue à flèche articulée contrôlable (19).

12. Procédé utilisant un appareil de collecte de cônes, l'appareil (10) comprenant des mâchoires (11, 12) à placer l'une contre l'autre, entre lesquelles est laissé un interstice allongé (31) et configuré pour un fonctionnement dans lequel une branche d'arbre (29) placée dans l'interstice peut se rétracter à travers l'interstice mais les cônes (28) à collecter sur la branche ne passent pas à travers l'interstice et se détachent.

13. Procédé selon la revendication 12, comprenant :
- l'utilisation d'un appareil (10) comprenant une mâchoire supérieure (12) et une mâchoire inférieure (11), au moins une des mâchoires étant reliée mobile à l'appareil, et les mâchoires ayant une position fermée et également une position ouverte qui est plus ouverte que la position fermée ;
- le déplacement des mâchoires dans la position ouverte en utilisant au moins un actionneur (14) configuré dans l'appareil et le déplacement soit de la mâchoire supérieure, soit de la mâchoire inférieure, ou des deux mâchoires, dans les positions ouverte et fermée ;
- le positionnement soit dudit appareil (10) soit d'une branche d'arbre (29) contenant des cônes (28) à collecter, de telle manière qu'au moins une partie de la branche d'arbre est placée entre les mâchoires (11, 12) ;
- le transfert des mâchoires (11, 12) dans la position fermée en utilisant ledit actionneur (14), dans lequel au moins un interstice allongé (31) est formé entre les mâchoires, l'interstice ayant une hauteur prédéterminée qui permet la rétractation de la branche d'arbre (29) placée dans l'interstice à travers l'interstice mais est configuré plus petit que l'épaisseur des cônes (28) à collecter sur la branche d'arbre ; et
- le transfert soit de l'appareil (10) soit de la branche d'arbre (29) de telle sorte que la branche d'arbre se rétracte à travers l'interstice (31) et des cônes (28) se détachent simultanément de la branche d'arbre.

14. Procédé selon la revendication 13, dans lequel ledit positionnement de l'appareil (10) et ledit détachement des cônes (28) sont réalisés de telle manière que l'appareil se déplace en rapport avec la branche d'arbre (29), et en outre, la collecte est réalisée à partir d'arbres sur pied.

15. Procédé selon la revendication 13 ou 14, dans lequel l'appareil (10) est raccordé à la grue à flèche articulée contrôlable (19) d'une machine de travail (26), au moyen de laquelle l'appareil se déplace.
